# EUROPEAN PATENT APPLICATION

(11) **EP 3 480 722 A1**
(43) Date of publication of application: **08.05.2019**
(21) Application number: 18196327.3
(22) Date of filing: 24.09.2018
(51) Int. Cl.: G06F 21/62, G05B 19/418, G06F 21/60

(54) **METHOD AND APPARATUS FOR EDITING, OBTAINING, AND PROTECTING PROCESS OF SOLAR CELL PRODUCTION DEVICE**

(30) Priority: 07.11.2017 CN 201711086468
(71) Applicant: Beijing Juntai Innovation Technology Co., Ltd, 100176 Beijing (CN)
(72) Inventor: ZHANG, Mengshi, BEIJING, Beijing 100176 (CN); YANG, Bin, BEIJING, Beijing 100176 (CN)
(74) Representative: Roman, Alexis

(57) **Abstract**

The present application discloses a method and an apparatus for editing, obtaining, and protecting a process of a solar cell production device. The editing method comprises: storing, hardware information of production devices on a solar cell production line on a process editing terminal; editing, on the process editing terminal, process data of a specified production device by using a process editor; and encrypting the process data according to hardware information that is of the specified production device and that is stored on the process editing terminal and an encryption method, to obtain a process file of the specified production device. The possibility of obtaining process data by people around the production device is effectively reduced, and the process file is not easily cracked, thereby greatly improving the data security.

## Description

This application is proposed based on a Chinese patent application with an application number of 201711086468.7 and a filing date of November 7, 2017, and claims the priority of the Chinese patent application. The entire content of the Chinese patent application is incorporated herein by reference.

### Technical Field

The present application relates to the technical field of solar production devices, and in particular, to a method and an apparatus for editing, obtaining, and protecting a process of a solar cell production device.

### Background Art

The process data of a solar cell production device is relatively complicated, and the data security is of vital importance, especially the core production device, such as a plasma enhanced chemical vapor deposition (PECVD) device.

At present, the process data of the solar cell production device is mainly written on site on the software of the production device by a technician with a particular permission. Due to the complexity of on-site personnel, it is easy to cause data leakage. In addition, it is easy to cause errors in the input process data due to human negligence.

There are two main storage methods for the process data of the solar cell production device in the prior art. One is the storage method of data inside software, and the other is the storage method of process files. The process data of the first method has high security and cannot be illegally copied, but it cannot be migrated to other machines, resulting in easy input of incorrect process data. The data of the second method is easy to migrate, but is easy to be illegally copied, resulting in leakage of process data.

### Summary of the Application

The present application provides a method for editing a process of a solar cell production device, including:
storing hardware information of production devices on a solar cell production line on a process editing terminal;
editing process data of a specified production device by using a process editor on the process editing terminal; and
encrypting the process data according to hardware information that is of the specified production device and that is stored on the process editing terminal and an encryption method, to obtain a process file of the specified production device.

### Brief Description of the Drawings

In order to more clearly describe the technical solutions in the embodiments of the present application or in the prior art, the accompanying drawings that need to be used in the embodiments will be briefly described below. Apparently, the accompanying drawings in the following description are only some embodiments disclosed in the present application. A person of ordinary skill in the art can further derive other accompanying drawings according to these accompanying drawings.
FIG. 1 is a flowchart of a method for editing a process of a solar cell production device according to an embodiment of the present application;
FIG. 2 is a flowchart of a method for obtaining a process of a solar cell production device according to an embodiment of the present application;
FIG. 3 is a schematic structural diagram of an apparatus for editing a process of a solar cell production device according to an embodiment of the present application;
FIG. 4 is a schematic structural diagram of a solar cell production device according to an embodiment of the present application;
FIG. 5 is a flowchart of a method for protecting process data of a solar cell production device according to an embodiment of the present application; and
FIG. 6 is a schematic structural diagram of an apparatus for protecting process data of a solar cell production device according to an embodiment of the present application.

### Detailed Description of the Application

The following describes in detail the embodiments of the present application, examples of which are illustrated in the accompanying drawings, in which the same or similar reference numerals denote the same or similar parameters or elements having the same or similar functions throughout. The embodiments described below with reference to the drawings are exemplary, are used to explain the present application only, and cannot be construed as limiting the present application.

The present application provides a method and an apparatus for editing, obtaining, and protecting a process of a solar cell production device, to resolve the problem in the prior art that process data is easily leaked.

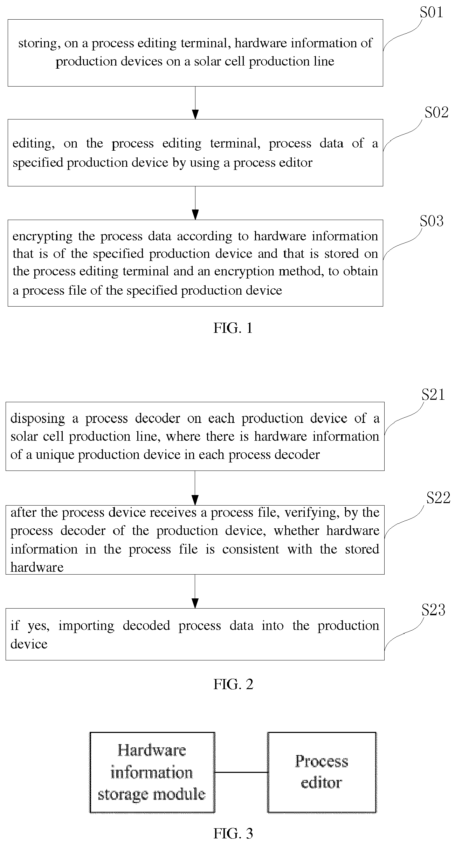

In order to better understand the technical solutions and technical effects of the present application, detailed descriptions of specific embodiments will be given below with reference to schematic flowcharts. As shown in FIG. 1, FIG. 1 is a first flowchart of a method for editing a process of a solar cell production device according to an embodiment of the present application. The method may comprise the following steps: Step S01, storing, hardware information of production devices on a solar cell production line on a process editing terminal.

In this embodiment, the production device may comprise a PECVD device, a PVD device, a dry etching device, a screen printing device, a diffusion device, a grinding device, a wet etching device, a laminating machine, a welding machine, or the like. There may be one or more production devices for each type, but each production device has unique hardware information.

The hardware information comprises but is not limited to: multiple device hardware features such as a device computer hard disk number, an MAC address, and a PLC CPU number.

Step S02, editing, on the process editing terminal, process data of a specified production device by using a process editor.

In this embodiment, the specified production device is production device to obtain process data. The specified production device is one or more production devices with a same model, and the process editor generates, in batches, process files of the one or more production devices with a same model. That is, the specified production device may be a production device on a product line, or may be multiple devices of a same type. This is not limited herein. Production devices of different types have different process data. For example, the production device is a PECVD device, and the process data comprises: a process gas, a process temperature, a process duration, and a gas flow. It should be noted that, for example, it is not necessary to edit all the process data on the process editor, and only the core process data may be edited on the process editor, and the conventional data, such as non-critical process parameters like chamber pressure, vacuum degree, and prebaking temperature are edited on the host of the on-site production device. In addition, because there are also individual differences between different devices of the same type, for example, 100°C of this machine is equivalent to 103°C of another machine, calibration correction values can be set on each machine, so that the uniformly edited process parameters can be run with high precision on all the machines to achieve good process consistency.

Step S03, encrypting the process data according to hardware information that is of the specified production device and that is stored on the process editing terminal and an encryption method, to obtain a process file of the specified production device.

In this embodiment, the encryption method can be any encryption and decryption method used by a person skilled in the art according to actual situations, and for example, it is feasible to use algorithms such as DES, 3DES, IDEA, RSA, AES, and BLOWFISH as the encryption algorithm. Furthermore, in the key generation process, the number of times of encryptions can also be changed, for example, single-layer encryption is replaced with multi-layer encryption, and in multi-layer encryption, encryption methods of various layers are combined in different manners. For example, the process editor stores the hardware information of the PECVD machine on the production line. When the process data is generated, the corresponding machine needs to be selected and then the process file is generated according to the hardware information thereof. In addition, the process editor may also edit the process files of a batch of devices of the same model and specification of the production device. In this case, the key does not comprise the hardware information of the production device, and then the hardware information of the production device is used to encrypt the process files, such as a process file encryption password.

Preferably, the process file further comprises: an editing password. After the process file is generated, if the process file needs to be edited, process data editing needs to be performed on the process file when verification on the editing password succeeds. That is, when the process file is generated, a dedicated password needs to be set, and when the process file is opened again by using the process editor, the process file can be edited only when password verification succeeds. Multi-encryption is performed on the process file to effectively ensure the security of information.

Further, the method for editing a process further comprises: transmitting the process file to the specified production device by using a mobile storage device or network communication.

In a specific embodiment, a PECVD is used as an example for description. The process editor is responsible for newly establishing, opening, writing, and generating an encrypted process file. The content of the process file comprises a password of the file itself, multiple types of hardware information corresponding to the PECVD device (including multiple device hardware features such as a device computer hard disk number, an MAC address, and a PLC CPU number), and the process data itself.

The method for editing a process of a solar cell production device according to the present application comprises: storing, hardware information of production devices on a solar cell production line on a process editing terminal; editing, process data of a specified production device by using a process editor on the process editing terminal; and encrypting the process data according to hardware information that is of the specified production device and that is stored on the process editing terminal and an encryption method, to obtain a process file of the specified production device. Because a terminal for process editing is separated from a production device, for example, a more secure computer is used for offline process editing, instead of using a computer of an on-site production device for process editing, the possibility of obtaining process data by people around the production device is effectively reduced, and after the process data is edited, the process data can be encrypted according to a specified production device. Compared with the existing method for encryption only by using an algorithm, the application considers that some hardware information of the device has unique characteristics: a computer hard disk number, an MAC address, a PLC CPU number, so that even if an encryption rule is cracked, the final process parameter cannot be cracked because of the unique characteristics of the hardware information, thereby greatly increasing the data security.

As shown in FIG. 2, FIG. 2 is a flowchart of a method for obtaining a process of a solar cell production device according to an embodiment of the present application.

In this embodiment, the method for obtaining a process comprises:
Step S21, disposing a process decoder on each production device of a solar cell production line, where there is hardware information of a unique production device in each process decoder.

In this embodiment, there is a process decoder on each production device, and the process decoder is bound with the production device. For example, each process decoder stores hardware information of a unique production device; the hardware information may be hardware information that is of a current production device and that is input by an installer when installing a process encoder, or may be hardware information that is of the production device where the process encoder is installed and that is automatically read when the process encoder is installed, and then is cured in the process decoder, and the hardware information comprises but is not limited to: multiple device hardware features such as a device computer hard disk number, an MAC address, and a PLC CPU number. In addition, alternatively, after receiving the process file, the process decoder first reads hardware information of the production device for decoding the process file.

This essentially disposes the process editor and process decoder on different terminals, enabling off-line process editing, and enabling the process editing process to be carried out in a secure and reliable environment, and then encryption is performed to obtain a process file. An operator of the production device can see only the encrypted process file, but can't see the process data, to effectively prevent divulgement.

Specifically, the production device comprises: a PECVD device, a PVD device, a dry etching device, a screen printing device, a diffusion device, a grinding device, a wet etching device, a laminating machine, or a welding machine.

Step S22, after the process device receives a process file, verifying, by the process decoder of the production device, whether hardware information in the process file is consistent with the hardware information in the process decoder.

In this embodiment, the decoding process and the verification process of the process decoder may be the same as those in the prior art. For example, the decoding process and the verification process of the process decoder may comprise: first identifying a process file, then performing decryption, and then determining whether hardware information in the process file is consistent with the hardware information in process decoder.

Step S23, if yes, importing decoded process data into the production device.

Specifically, a PECVD is used as an example for description: after decoding the process file, the process decoder is responsible for verifying whether the PECVD machine hardware information is consistent with the process file; if yes, the process data is imported into the PECVD device software or the PECVD device PLC. By using the PECVD device as an example, the process data comprises: a process gas, a process temperature, a process duration, and a gas flow.

According to the method for obtaining a process of a solar cell production device provided in the present application, only the process decoder is disposed in the production device, and the process editor is not disposed; a process file received by the production device is an encrypted file, and an operator of the device cannot see the process data, thereby greatly improving the data security.

As shown in FIG. 3, FIG. 3 is a schematic structural diagram of an apparatus for editing a process of a solar cell production device according to an embodiment of the present application.

In this embodiment, the apparatus for editing a process of the solar cell production device comprises:
a hardware information storage module configured to store hardware information of production devices on a solar cell production line; and a process editor configured to edit, on the process editor, process data of a specified production device and encrypt the process data according to hardware information that is of the specified production device and that is stored on the hardware information storage module and an encryption method, to obtain a process file of the specified production device.

Preferably, the process editor comprises: a process data editing unit configured to edit data of a process parameter; and a file generation unit configured to generate a process file; or the process editor comprises: a process data editing unit configured to edit data of a process parameter; a password setting unit configured to set an editing password and/or a process file encryption password; a file generation unit configured to generate a process file; a password verification unit configured to verify the editing password; and a decoding unit configured to decode a process file when verification on the editing password succeeds.

Because there are usually multiple devices of a same model in a production line, and the process data is the same, in order to avoid the case of an error in the manual copying process, the process editor is further configured to: when the specified production device is one or more production devices with a same model, generate, in batches, process files of the one or more production devices with a same model.

Further, to facilitate transmission of a process file, the apparatus for editing a process further comprises: a mobile storage device configured to transmit a process file to the specified production device by using the mobile storage device; and/or a network, configured to connect to hosts of production devices, and transmit the process file to the specified production device by using the network.

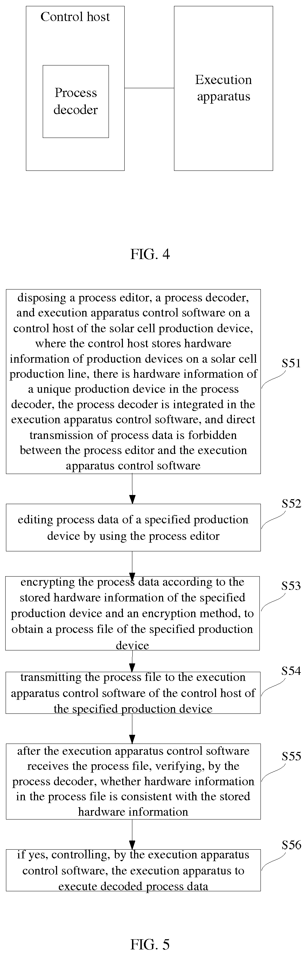

As shown in FIG. 4, FIG. 4 is a schematic structural diagram of a solar cell production device according to an embodiment of the present application.

In this embodiment, the solar cell production device comprises: a control host and an execution apparatus.

A process decoder is disposed in the control host, and there is hardware information of the control host and/or the execution apparatus in the process decoder; and after receiving a process file, the control host verifies, by using the process decoder, whether hardware information in the process file is consistent with the hardware information stored in the process decoder, and if yes, controls the execution apparatus to execute decoded process data. The hardware information comprises but is not limited to: multiple device hardware features such as a device computer hard disk number, an MAC address, and a PLC CPU number.

Specifically, the production device comprises: a PECVD device, a PVD device, a dry etching device, a screen printing device, a diffusion device, a grinding device, a wet etching device, a laminating machine or a welding machine, and when the production device is a PECVD device, the process data comprises: a process gas, a process temperature, a process duration, and a gas flow.

In other embodiments, the present application further provides a method for protecting process data. In this embodiment, the process editor and the process decoder may be disposed in a same production device, so as to implement an online process editing function As shown in FIG. 5, FIG. 5 is a flowchart of a method for protecting process data of a solar cell production device according to an embodiment of the present application.

In this embodiment, the method for protecting process data of a solar cell production device comprises:
Step S51, disposing a process editor, a process decoder, and execution apparatus control software on a control host of the solar cell production device, where the control host stores hardware information of production devices on a solar cell production line, there is hardware information of a unique production device in the process decoder, the process decoder is integrated in the execution apparatus control software, and direct transmission of process data is forbidden between the process editor and the execution apparatus control software, and only a process file can be transmitted therebetween.

In this embodiment, the hardware information comprises but is not limited to: multiple device hardware features such as a device computer hard disk number, an MAC address, and a PLC CPU number. Only a process file can be transmitted between the process editor and the execution apparatus control software. Because there is a process editor, process data can be edited online.

Step S52, editing process data of a specified production device by using the process editor.

Step S53, encrypting the process data according to the stored hardware information of the specified production device and an encryption method, to obtain a process file of the specified production device.

Step S54, transmitting the process file to the execution apparatus control software of the control host of the specified production device.

In this embodiment, the specified production device may be production device where the process editor is located, or may be another production device. File transmission can be performed by using a mobile memory or a network.

Step S55, after the execution apparatus control software receives the process file, verifying, by the process decoder, whether hardware information in the process file is consistent with the hardware information in the process decoder.

Step S56, if yes, controlling, by the execution apparatus control software, the execution apparatus to execute decoded process data.

Preferably, the process file further comprises: an editing password. After the process file is generated, if the process file needs to be edited, process data editing needs to be performed on the process file when verification on the editing password succeeds.. When a technician needs to leave temporarily during writing of a process, the process editor can be locked, and the device software runs normally. This ensures that the process data is not leaked during the writing process.

Further, the method for protecting process data further comprises:
when a process file sent by another production device is received, and the process decoder verifies that hardware information in the process file is consistent with the hardware information in the process decoder, sending the decoded process data to a process editor on a same production device. In this way, the process editor of the production device can obtain a process file transmitted from the outside, to facilitate local editing. In addition, the process file on which local editing is performed can also be transmitted to another production device, thereby greatly improving the flexibility and convenience of process editing and file transmission.

Process editing is performed on the process file when verification on the editing password succeeds, to obtain a process file of a preset production device. The preset production device may be a current production device, or may be another production device.

The process file is transmitted to the preset production device by using a mobile storage device or by using a network.

Specifically, the specified production device or the preset production device is one or more production devices with a same model, and the process editor generates, in batches, process files of the one or more production devices with a same model. The production device comprises any one or more of the following: a PECVD device, a PVD device, a dry etching device, a screen printing device, a diffusion device, a grinding device, a wet etching device, a laminating machine, or a welding machine.

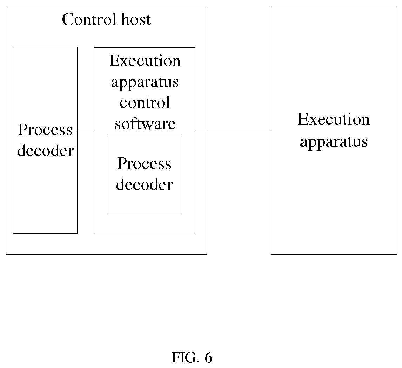

As shown in FIG. 6, FIG. 6 is a schematic structural diagram of an apparatus for protecting process data of a solar cell production device according to an embodiment of the present application. The apparatus for protecting process data of a solar cell production device comprises:
a control host and an execution apparatus, where a process editor, a process decoder, and execution apparatus control software are disposed on the control host, the control host stores hardware information of production devices on a solar cell production line, there is hardware information of a unique production device in the process decoder, the process decoder is integrated in the execution apparatus control software, and direct transmission of process data is forbidden between the process editor and the execution apparatus control software;
the process editor configured to edit process data of a specified production device, then encrypt the process data according to the stored hardware information of the specified production device and an encryption method, to obtain a file process of the specified production device, and next transmit the process file to the execution apparatus control software of the control host of the specified production device; and
the execution apparatus control software configured to verify, by using the process decoder, whether the hardware information in the process file is consistent with the hardware information in the process decoder after receiving the process file, and if yes, the execution apparatus controls the execution apparatus to execute decoded process data.

Specifically, the process editor comprises: a process data editing unit configured to edit data of a process parameter; and a file generation unit configured to generate a process file; or the process editor comprises: a process data editing unit configured to edit data of a process parameter; a password setting unit configured to set an editing password and/or a process file encryption password; a file generation unit configured to generate a process file; a password verification unit configured to verify the editing password; and a decoding unit configured to decode a process file when verification on the editing password succeeds.

The process decoder is specifically configured to: when a process file sent by another production device is received, and the process decoder verifies that hardware information in the process file is consistent with the hardware information in the process decoder, send decoded process data to a process editor on a same production device. The process editor is specifically configured to perform process editing on the process file when verification on the editing password succeeds, to obtain a process file of a preset production device, and then transmit the process file to the preset production device by using a mobile storage device or by using a network.

For example, the specified production device or the preset production device is one or more production devices with a same model, and the process editor generates, in batches, process files of the one or more production devices with a same model. The production device comprises one of more of the following: a PECVD device, a PVD device, a dry etching device, a screen printing device, a diffusion device, a grinding device, a wet etching device, a laminating machine or a welding machine, and when the production device is a PECVD device, the process data comprises: a process gas, a process temperature, a process duration, and a gas flow.

In the description provided herein, a lot of specific details are described. However, it can be understood that embodiments of the present application can be practiced without these specific details. In some examples, commonly known methods, structures, and technologies have not been shown in detail in order not to obscure the understanding of this description.

Similarly, it should be understood that in order to streamline the present disclosure and aid in the understanding of one or more of the various inventive aspects, in the foregoing descriptions of the exemplary embodiments of the present application, the various features of the present application are sometimes grouped together into a single embodiment, diagram, or description thereof. However, the disclosed method should not be interpreted as reflecting the following intention: that is, the claimed application requires more features than those explicitly set forth in each claim.

Those skilled in the art can understand that modules in the apparatus in the embodiment can be adaptively changed and set in one or more devices different from this embodiment. The modules or units or components in the embodiments can be combined into one module or unit or component, and furthermore they can be divided into multiple sub-modules or sub-units or sub-components. Except for the fact that at least some of such features and/or processes or units are mutually exclusive, any combination can be used to combine all features disclosed in this specification (including accompanying claims, abstracts, and drawings), and all the processes or units of any method or device disclosed in this way. Each feature disclosed in this specification (including accompanying claims, abstract, and drawings) may be replaced by an alternative feature that provides the same, equivalent, or similar purpose, unless explicitly stated otherwise.

In addition, those skilled in the art can understand that although the embodiments described herein comprise some features comprised in other embodiments rather than other features, combinations of features of different embodiments are intended to be within the scope of the present application and form different embodiments. For example, in the following claims, any one of the claimed embodiments can be used in any combination manner.

Various component embodiments of the present application can be implemented as hardware, or as software modules running on one or more processors, or as a combination thereof. Those skilled in the art should understand that a microprocessor or a digital signal processor (DSP) may be used in practice to implement some or all functions in a system for remotely operating a single operation object by an multi-operation end according to an embodiment of the present application. The present application may also be implemented as a device or a system program (such as a computer program and a computer program product) for performing some or all of the methods described herein. Such a program implementing the present application may be stored on a computer readable medium or may have the form of one or more signals. Such signals may be downloaded from the Internet's website, may also be provided on carrier signals, or may be provided in any other form.

It should be noted that the above embodiments describe the present application and do not limit the present application, and those skilled in the art can design alternative embodiments without departing from the scope of the appended claims. In the claims, any reference sign placed between parentheses shall not be construed as limiting the claim. The word "comprising" does not exclude the presence of elements or steps that are not listed in the claims. The word "a" or "an" preceding an element does not exclude the presence of a plurality of such elements. The application can be implemented by means of hardware comprising several different elements and by means of a suitably programmed computer. In the unit claims listing several systems, several of these systems may be embodied by the same hardware item. The use of the words first, second, third, etc. does not indicate any order. These words may be explained as nouns.

## Claims

1. A method for editing a process of a solar cell production device, comprising:
storing hardware information of production devices on a solar cell production line on a process editing terminal;
editing process data of a specified production device by using a process editor on the process editing terminal; and
encrypting the process data according to hardware information that is of the specified production device and that is stored on the process editing terminal and an encryption method, to obtain a process file of the specified production device.

2. The method for editing a process according to claim 1, wherein the process file further comprises: an editing password, wherein process data editing is performed on the process file when verification on the editing password succeeds.

3. The method for editing a process according to claim 1, wherein the specified production device is one or more production devices with a same model, and the process editor generates, in batches, process files of the one or more production devices with a same model.

4. The method for editing a process according to claim 1, wherein the method for editing a process further comprises:
transmitting the process file to the specified production device by a mobile storage device or network communication.

5. A method for obtaining a process of a solar cell production device, comprising:
disposing a process decoder on each production device of a solar cell production line,
wherein there is hardware information of a unique production device in each process decoder;
after the process device receives a process file, verifying, by the process decoder of the production device, whether hardware information in the process file is consistent with the hardware information in the process decoder; and
if yes, importing decoded process data into the production device.

6. The method for obtaining a process according to claim 5, wherein the production device comprises:
a PECVD device, a PVD device, a dry etching device, a screen printing device, a diffusion device, a grinding device, a wet etching device, a laminating machine, or a welding machine.

7. An apparatus for editing a process of a solar cell production device, comprising:
a hardware information storage module configured to store hardware information of production devices on a solar cell production line; and
a process editor configured to edit process data of a specified production device and
encrypt the process data according to hardware information that is of the specified production device and that is stored on the hardware information storage module and an encryption method, to obtain a process file of the specified production device.

8. The apparatus for editing a process according to claim 7, wherein:
the process editor comprises:
a process data editing unit configured to edit data of a process parameter; and
a file generation unit configured to generate a process file; or
the process editor comprises:
a process data editing unit configured to edit data of a process parameter;
a password setting unit configured to set an editing password and/or a process file encryption password;
a file generation unit configured to generate a process file;
a password verification unit configured to verify the editing password; and
a decoding unit configured to decode a process file when verification on the editing password succeeds.

9. A solar cell production device, comprising:
a control host and an execution apparatus, wherein
a process decoder is disposed in the control host, and there is hardware information of the control host and/or the execution apparatus in the process decoder; and
after receiving a process file, the control host verifies, by using the process decoder,
whether hardware information in the process file is consistent with the hardware information stored in the process decoder, and if yes, controls the execution apparatus to execute decoded process data.

10. The solar cell production device according to claim 9, wherein the production device comprises:
a PECVD device, a PVD device, a dry etching device, a screen printing device, a diffusion device, a grinding device, a wet etching device, a laminating machine or a welding machine, and when the production device is a PECVD device, the process data comprises:
a process gas, a process temperature, a process duration, and a gas flow.

11. A method for protecting process data of a solar cell production device, comprising:
disposing a process editor, a process decoder, and execution apparatus control software on a control host of the solar cell production device, wherein the control host stores hardware information of production devices on a solar cell production line, there is hardware information of a unique production device in the process decoder, the process decoder is integrated in the execution apparatus control software, and direct transmission of process data is forbidden between the process editor and the execution apparatus control software;
editing process data of a specified production device by using the process editor;
encrypting the process data according to the stored hardware information of the specified production device and an encryption method, to obtain a process file of the specified production device;
transmitting the process file to the execution apparatus control software of the control host of the specified production device;
after the execution apparatus control software receives the process file, verifying, by the process decoder, whether hardware information in the process file is consistent with the hardware information in the process decoder; and
if yes, controlling, by the execution apparatus control software, the execution apparatus to execute decoded process data.

12. The method for protecting process data according to claim 11, wherein the process file further comprises: an editing password, wherein process data editing is performed on the process file when verification on the editing password succeeds.

13. The method for protecting process data according to claim 12, wherein the method for protecting process data further comprises:
when a process file sent by another production device is received, and the process decoder verifies that hardware information in the process file is consistent with the hardware information in the process decoder, sending the decoded process data to a process editor on a same production device;
performing process data editing on the process file when verification on the editing password succeeds, to obtain a process file of a preset production device; and
transmitting the process file to the preset production device by using a mobile storage device or network communication.

14. An apparatus for protecting process data of a solar cell production device, comprising:
a control host and an execution apparatus, wherein a process editor, a process decoder, and
execution apparatus control software are disposed on the control host, the control host stores hardware information of production devices on a solar cell production line, there is hardware information of a unique production device in the process decoder, the process decoder is integrated in the execution apparatus control software, and direct transmission of process data is forbidden between the process editor and the execution apparatus control software;
the process editor configured to edit process data of a specified production device, then encrypt the process data according to the stored hardware information of the specified production device and an encryption method, to obtain a file process of the specified production device, and next transmit the process file to the execution apparatus control software of the control host of the specified production device; and
the execution apparatus control software configured to verify, by using the process decoder, whether the hardware information in the process file is consistent with the hardware information in the process decoder after receiving the process file, and if yes, the execution apparatus controls the execution apparatus to execute decoded process data.

15. The apparatus for protecting process data according to claim 14, wherein the process editor comprises:
a process data editing unit configured to edit data of a process parameter; and
a file generation unit configured to generate a process file; or
the process editor comprises:
a process data editing unit configured to edit data of a process parameter;
a password setting unit configured to set an editing password and/or a process file encryption password;
a file generation unit configured to generate a process file;
a password verification unit configured to verify the editing password; and
a decoding unit configured to decode a process file when verification on the editing password succeeds.
